# EUROPEAN PATENT SPECIFICATION

(11) **EP 2 903 364 B1**
(45) Date of publication and mention of the grant of the patent: **03.05.2017**
(21) Application number: 14305123.3
(22) Date of filing: 30.01.2014
(51) Int. Cl.: H04W 72/00, H04J 13/00, H04W 72/10

(54) **Prioritising requests for communication resources for device to device wireless communication**
Priorisierung von Anfragen für Kommunikationsressourcen zur drahtlosen Vorrichtung-zu-Vorrichtung-Kommunikation
Hiérarchisation de demandes de ressources de communication pour communication sans fil de dispositif à dispositif

(43) Date of publication of application: 05.08.2015
(73) Proprietor: ALCATEL LUCENT, 92100 Boulogne-Billancourt (FR)
(72) Inventor: Lim, Seau Sian, Swindon, Wiltshire SN5 7DJ (GB); Palat, Sudeep, Swindon, Wiltshire SN5 7DJ (GB); Casati, Alessio, Swindon, Wiltshire SN5 7DJ (GB)
(74) Representative: Sarup, David Alexander

(56) References cited:
- EP-A2- 1 734 772
- ALCATEL-LUCENT ET AL: "Access schemes for D2D broadcast communications", 3GPP DRAFT; R2-133486 COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Ljubljana, Slovenia; 20131007 - 20131011 28 September 2013 (2013-09-28), XP050719205, Retrieved from the Internet: URL:http://www.3gpp.org/ftp/tsg_ran/WG2_RL 2/TSGR2_83bis/Docs/ [retrieved on 2013-09-28]

## Description

### FIELD OF THE INVENTION

The present invention relates to requesting communication resources for device to device wireless communication.

### BACKGROUND

For device to device communication using wireless communication signals the channel, that is, the time-frequency resource which the signal is to be transmitted over, should, where possible, be allocated to the device transmitting the signal to avoid signal collision. Thus, the device should request the resource prior to transmitting the signal.

There are two conventional methods of resource allocation, namely coordinated access and uncoordinated access:

### Coordinated access

In such an access scheme, there exists a cluster head which acts as a resource allocation controller. In network coverage case, the cluster head can either be the eNB or a dispatcher. While in the out-of-coverage public safety case, the cluster head is the dispatcher.

### Uncoordinated access

Such access scheme allows the UE (user equipment) to autonomously allocate resources to itself from a pool of semi-statically configured resource blocks. As it is uncoordinated, the resources allocated are in contention as another UE may allocate itself the same resources.

Coordinated access is reasonably straightforward as it is centrally managed via an access point to the network, channels can be dedicated to particular devices and collisions can be avoided.

With uncoordinated access however, things are not as straightforward. Uncoordinated access becomes important though in device to device communication where network coverage may not be available, such that the central management of the access may be difficult or not possible. In such a scheme, one way to reduce collisions is for the device to detect potential collisions and avoid them where it can.

Examples of such schemes are CSMA (carrier sense multiple access), CSMA/ CA (collision avoidance) and CSMA/CD (collision detection). A pure CSMA will result in high collision and low throughput because it is quite likely two users may try to transmit at the same time. CSMA/CA and CSMA/CD are used to reduce collisions. In CSMA/CD, the transmitting node listens to the carrier that it is transmitting to detect any collision. If it detects a collision, it will stop transmitting and perform a random (exponential) backoff. In CSMA/CA, the transmitting node (i.e. STA) sends a Request-to-send (RTS) after detecting the carrier is not used and the receiving node (i.e. WLAN AP) responds to the transmitting node with a Clear-to-send (CTS) signal, if no other node is using the same carrier and the transmitting node transmits upon receiving the CTS. In this case only 1 node may use the carrier at any one time. If the transmitting node does not receive a CTS for a period of time, it will perform a random backoff. Transmission is performed in its entirety and the receiving node will provide an ACK if it received the transmission. If no ACK is received, the transmitting node will assume collision and perform another random backoff.

In device to device D2D communication using half duplex links a UE can only transmit or receive on a particular channel at any one time. Hence CSMA/ CD cannot be used for collision handling. It has also been agreed that a D2D link is a broadcast link (i.e. many valid users will try to receive the transmitting message). This makes it difficult to perform a conventional CSMA/ CA as it is hard to decide which device should send the CTS and ACK to perform a complete CSMA/ CA in a no cluster head case.

In a typical broadcast mechanism, the transmitting UE needs to announce to the potential receiving UEs that it is going to broadcast a message and also the time-frequency resources that is going to use for this message. However, in order to make this announcement in a half duplex system, the transmitting UE will have to secure another time-frequency resources to do so. Thus, the allocation of resources and the avoidance or at least reduction of collisions in such device to device communication is not straightforward.

A further issue arises if one wishes to provide the allocation of these resources in a prioritised manner. For example, some user equipment may have a higher priority than others, or some transmissions by user equipment may have a higher priority. In public safety scenarios for example, the person in charge may need to be able to communicate with other users and where all available channels are currently being used it would be desirable if they could nevertheless be allocated a channel. Alternatively an emergency high priority call may need to be made. Accordingly, it is desired to provide a means of requesting and allocating communication resources for uncoordinated device to device communication that reduces collisions and provides priority to high priority users and/or transmissions.

EP1734772 discloses a method of uplink pre-emption by UEs entering a group call, The talker in the group sends a message to the listeners indicating its priority. The later UE determines from the message if its own priority is higher and if so it determines that a pre-emption for the uplink can be made. In this regard all UEs are within the same cell and communicate with each other via base station using the uplink and downlink channels of the cell.

### SUMMARY

A first aspect of the present invention provides a method performed at a user equipment of requesting a communication channel for use by said user equipment for broadcasting data to at least one further user equipment when all of a plurality of communication channels configured for direct user equipment to user equipment communication are currently being used, wherein each of said plurality of communication channels is a half duplex channel and each of said plurality of communication channels has an associated preamble identifying a block of transmission resources comprising said communication channel; said method comprising: determining a priority of an active user equipment currently broadcasting data to other user equipment using one of said plurality of communication channels; and in response to detecting that said priority is lower than a current priority of said user equipment, transmitting a request for use of said one of said plurality of communication channels to said active user equipment.

In device to device or D2D communication, it was agreed to use a half duplex link so that a UE can only transmit or receive at any one time. Hence CSMA/CD cannot be used for collision handling. In co-pending European application EP13306485.7, a method based on CSMA/CA is proposed for the distributed access. In this method there is a 1 - 1 mapping of preamble to communication channel. When a transmitting UE senses that the communication or preamble channel is not busy for a period of time, it indicates in a preamble channel that it would like to use the communication channel (like a Request-To-Send RTS). If a response is sent by a receiving UE on the communication channel that it is Clear-to-Send (CTS), the transmitting UE transmits in the communication channel. This method addressed some of the issues associated with collision on half duplex communication channels that are not centrally managed.

However, there is no consideration of the allocation of these resources in a prioritised manner, which maybe required in some circumstances where, some user equipment has a higher priority than others. In public safety scenarios for example, the person in charge may need to be able to communicate with other users and where all available channels are currently being used it would be desirable if they could be allocated a channel.

This is addressed by the present invention by determining the priority of the current active user of a communication channel, this may be the priority of the user equipment and/or the priority of the current transmission being made and comparing it with the priority of the user equipment requiring a resource and/or the transmission to be made by that user equipment and only where the priority of the active user is lower than the user requiring the resource is a request sent. By restricting the transmission of requests to user equipment of a higher priority in these conflict cases, a system can be configured to respond to such requests aware that the requester is of a higher priority, thus resources can be allocated on a priority basis. It should be noted that user equipment with a higher priority may be user equipment that is a higher priority device, perhaps used by the person in charge, or it may be user equipment that currently has a higher priority as it needs to make a high priority transmission.

In some embodiments, said step of transmitting said request comprises transmitting a pre-emption signal to said active user equipment indicating that a higher priority user equipment requires said one of said plurality communication channels and said user equipment should cease transmitting on said one of said plurality of communication channels.

In some cases the request may be sent as a pre-emption signal which indicates to the active user equipment that it should cease transmitting on the communication channel that it is currently using. In this regard, owing to the fact that such requests are only sent if it is determined that the user equipment sending the request has a higher priority, either because it is a higher priority device or because it wishes to make a higher priority transmission than the active user equipment, the active user equipment ceasing transmitting on receipt of such a pre-emption signal allows the resource to be allocated to the higher priority user equipment.

In some embodiments, said pre-emption signal comprises a predetermined pre-emption preamble signature, said user equipment transmitting said predetermined pre-emption preamble signature on a half duplex preamble channel corresponding to said one of said plurality communication channels.

The pre-emption signal may comprise a predetermined pre-emption preamble signature which allows the user equipment receiving it to identify it as a request from a higher priority user equipment. In this regard, when requesting channels that are not currently being used, a preamble signature is used to identify a particular preamble which has a corresponding communication channel that is being requested, the plurality of communication channels having a corresponding plurality of preambles identified by preamble signatures. Providing a further preamble signature, the pre-emption preamble signature, allows a request from a higher priority user to be identified and where this is sent on a preamble channel corresponding to the communication channel, then it is recognised that it is this communication channel that is being requested.

In this regard, it should be noted that preamble signatures are used to identify preambles and are transmitted along half duplex preamble channel(s). A preamble channel may be shared by multiple preambles or there may be a one to one correspondence between a communication channel and a preamble channel. In general, the user equipment will identify the preamble and associated communication resource from the preamble signature that is sent on the preamble channel. Where a preamble channel is shared by multiple preambles the preamble signatures may be orthogonal codes multiplexed on the same time frequency resource and identified by the user equipment using a matched filter.

In other embodiments, said each of said plurality of communication channels comprises a time frequency resource that is identified by a corresponding preamble signature, said pre-emption signal comprising said preamble signature identifying said one of said plurality of communication channels, said step of transmitting said request comprising: transmitting said preamble signature on a predefined pre-emption channel, said predefined pre-emption channel comprising a time frequency resource for broadcasting data to said user equipment, receipt of said preamble signature on said pre-emption channel indicating to said active user equipment that a higher priority user equipment requires said one of said plurality communication channels identified by said preamble signature and said user equipment should cease transmitting on said one of said plurality of communication channels.

In some cases, rather than having a predetermined pre-emption preamble signature, there maybe a predefined pre-emption channel which all active user equipment may monitor. The user equipment requesting the communication channel will send the preamble signature that is associated with the communication channel it is requesting along this predefined pre-emption channel and the user equipment that is using the communication channel indicated by the preamble signature will understand that a higher priority user equipment requires it and will cease transmitting on this communication channel. In this way, an existing preamble signature is used for this purpose and the number of preamble signatures does not need to be increased, though a further channel for transmitting this signal is required.

In other embodiments, said method comprises determining when said active user equipment stops transmitting on said one of said plurality of communication channels and in response to detecting that said active user equipment has stopped transmitting, performing said step of transmitting said request.

An alternative way of addressing the problem is to limit transmissions by user equipment on communication channels to a predetermined time, and providing a time following such a predetermined time during which only user equipment of a higher priority than the user equipment that was using that communication channel is allowed to request it. If the system is configured in this way, then when the user equipment has detected that the current user of the communication channel has a lower priority than itself it monitors the communication channel and when it detects that the user equipment has stopped transmitting, it has a predetermined time during which it can transmit a request for the communication channel and no low priority use equipment can compete with it for the resource. In this way, it does not need to explicitly indicate that it is pre-empting the other user equipment; the system simply ensures that there is this gap in time every now and again during which only higher priority user equipment can request the communication channel. If there are no higher priority user equipment that wish to request the communication channel at this time, then at the expiry of the time period during which only higher priority user equipment are allowed to request the communication channel, any user equipment will be able to request it.

In some embodiments, said method comprises in response to receiving a response to said request, transmitting data on said one of said plurality of communication channels during a predetermined transmission time and after said predetermined transmission time stopping transmitting during a predefined time, said predefined time allowing higher priority user equipment to transmit requests for said one of said plurality of channels.

Having transmitted the request, if the user equipment receives a response to the request indicating that the communication channel can be used by it then it will transmit data on that communication channel. In this regard although lower priority user equipment are precluded from requesting the channel during this period, other high priority user equipment may and thus, there may be collision. For this reason the user equipment does not transmit data until a response has been received indicating that its request has been received and accepted. Furthermore, as noted previously, the system is configured such that it will do this during a predetermined transmission time and after this predetermined transmission time it will stop transmitting during a predefined time. This predefined time leaves the communication channel available to user equipment of a higher priority that might require it. Thus, during this predefined time they are the only user equipment that are allowed to request this communication channel.

In some embodiments, said predetermined time is dependent upon at least one of a priority of said user equipment transmitting said data and quality of service of said data transmission.

The predetermined time may be a set amount that is configured by the system. Alternatively, it may be dependent upon the priority of the user equipment or the quality of service of the data transmission. In this way, where one has a particularly high priority user equipment or a particularly high quality of service for a particular data transmission then a longer time can be given during which they may use this communication channel. In this regard, it is unlikely, if a high priority user equipment is using the communication channel, that a higher priority user equipment will require it and, thus, allowing it to use it for a longer length of time will probably not introduce a delay for high priority user equipment trying to obtain a communication channel, as they are unlikely to be requesting that channel.

In some embodiments, the method comprises the step of monitoring said one of said plurality of communication channels for a predetermined time after transmitting said request and in response to detecting no communications, initiating data communication using said one of said plurality of communication channels.

In some cases, a response to the request may not be sent and instead the user equipment may monitor the communication channel that it wishes to use for a predetermined time after transmitting the request, and if it detects no communications during that time it will initiate the data communication on that channel. This is an alternative way to determining whether or not the communication channel has been made available by the active user to actually receive a response from the active user.

In some embodiments, the method comprises monitoring said one of said plurality of communication channels for a predetermined time after transmitting said request and in response to detecting continued communications from said active user equipment, waiting for a random back-off time and then transmitting said request again.

Where the communication channel is monitored for the predetermined time and continued communications are detected, this is an indication that the active user has not released the channel and this may be because it did not successfully receive the request and/or because there was a collision with another request and it received several garbled bits of request that it could not decode. Thus, monitoring the communication channel and determining that there is still communication is an indication of collision and therefore the user equipment should back off from its request and not transmit the request again until after a predetermined random back-off time. In this regard, where there is collision, if the back-off time was the same for all the user equipment then there would be continual collision. Thus, a random time is assigned to the user equipment such that it is likely that different user equipment will receive different times and their subsequent requests will not collide.

In some embodiments, said method further comprises transmitting data on said one of said communication channels; and in response to detecting an increased power level on a corresponding preamble channel, stopping transmitting data on said one of said communication channels and not requesting use of said one of said communication channels for a predetermined time.

In some embodiments, when the user equipment has been allocated a communication channel and is transmitting data on it and it detects an increased power level on the corresponding preamble channel, this is probably an indication of a higher priority user equipment trying to send a pre-emptive signal requesting this channel. However, it is also probably a sign of a collision, in that it cannot decode the signal. In some cases, the user equipment is configured not to ignore this but to stop transmitting data on the communication channel and not request use of it for a predetermined time which may allow the higher priority user equipment to successfully request the channel.

In some embodiments, the method comprises the step of monitoring said one of said plurality of communication channels for a predetermined time after transmitting said request and in response to detecting no response to said request, waiting for a random back-off time and then transmitting said request again.

In the case that the system is configured such that a response is sent to the request, where no response is received during a predetermined time then, this is an indication that there is collision and the user equipment will wait for a random back-off time and then transmit the request again.

In some embodiments, an indication of a priority of said user equipment is transmitted on said one of said plurality of communication channels along with said data.

Although the priority of the user equipment may be indicated in a number of ways, in some embodiments it is transmitted on the communication channel along with the data. In this way, the user equipment can monitor the communication channel as it is a broadcast channel and will be able to determine the priority of the user equipment that is currently using that communication channel and will be able to determine whether it has a higher priority itself. Similarly, when the user equipment itself transmits data on a communication channel, it will also transmit an indication of its priority along with that data.

In some embodiments, the method comprises transmitting data on one of said communication channels and receiving a pre-emption signal from one of said further user equipment, transmitting a response to said pre-emption signal and stopping transmitting data on said one of said communication channels and not requesting use of said communication channel for a predetermined time.

When the user equipment is allocated one of the communication channels and is transmitting data on it, and it receives a request from a further user equipment, it will transmit a response to the request, as it will recognise that the request is from a higher priority user equipment and it will stop transmitting data on the communication channel and not request use of the communication channel for a predetermined time. In this way, the communication channel is available for the higher priority user equipment.

A second aspect of the present invention provides a user equipment configured to communicate wirelessly with at least one further user equipment, said user equipment comprising: a port for receiving signals and outputting signals on one of a plurality of communication channels for direct user equipment to user equipment communication, said port being a half duplex port such that for said one communication channel a signal can either be received or transmitted; detection logic for detecting when all of said plurality of communication channels for direct user equipment to user equipment communication are currently being used, wherein each of said plurality of communication channels has an associated preamble identifying a block of transmission resources comprising said communication channel; priority detection logic for determining a priority of an active user equipment currently broadcasting data to other user equipment using one of said plurality of communication channels; and transmission circuitry operable to transmit to said active user equipment a request for use of said one of said plurality of communication channels in response to detecting that said priority is lower than a current priority of said user equipment.

A third aspect of the present invention provides a computer program which when executed by a data processing apparatus controls said data processing apparatus to perform steps in a method according to a first aspect of the present invention.

A fourth aspect of the present invention comprises a computer program product storing a computer program which when executed by a data processing apparatus controls said data processing apparatus to perform steps in a method according to a first aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates two user equipment in device to device communication;
Figures 2 to 4 illustrate signalling that occurs in different embodiments when a higher priority user equipment requests the resources of a lower priority user equipment;
Figure 5 shows a time flow for a pre-emption mechanism where a request is sent and the channels is taken a set time after this;
Figure 6 shows the time flow of the pre-emption mechanism based on Scenario 2 where collision occurs, the active user equipment stops transmitting but no response is sent; and
Figure 7 shows the time flow of the pre-emption mechanism based on Scenario 1 (see below) where collision is detected as the user equipment continues to transmit following the request.

### DESCRIPTION OF THE EMBODIMENTS

Before discussing the embodiments in any more detail, first an overview will be provided.

The basic idea is to provide a mechanism for a higher priority user or transmission to pre-empt an active lower priority user or transmission to use the D2D communication channel when all the resources for D2D communication channel are used. For user pre-emption, the user priority is known to each UE conducting D2D communication. For transmission pre-emption, the transmission priority is signalled with the data packet or is otherwise known to the pre-empting UE.

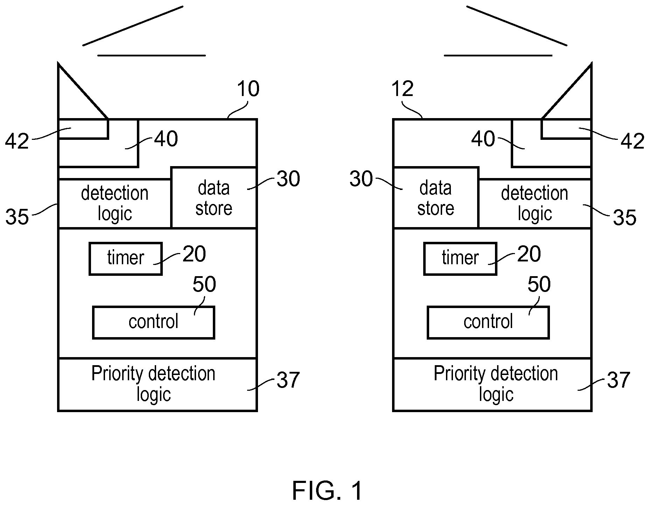

Figure 1 shows schematically two user equipment devices 10 and 12 communicating with each other wirelessly. Each device comprises a timer 20, a data store 30 and communication circuitry 40 which communicates wirelessly via port 42 which is a half duplex port being able to either receive or transmit on a particular channel at any particular time. There is also control circuitry 50 which controls the communication circuitry and, in particular, the channel that it is currently transmitting or receiving on.

Within data store 30 there is stored a set of preambles which act as signatures for identifying resources blocks. Alongside each preamble are details of the resource that it corresponds to and an indication of whether or not that preamble is known to be currently unavailable, and in some cases a probability of how likely it is that that preamble is currently in use.

On receipt of a request from a user to perform device-to-device communication, and on detection by detection logic 35 looking at the data in data store 30 that all the communication channels are currently busy, priority detection logic 37 will determine the priority of the user equipment that are currently transmitting on the communication channels and where one of them has a lower priority then the user equipment will transmit a request for that communication channel.

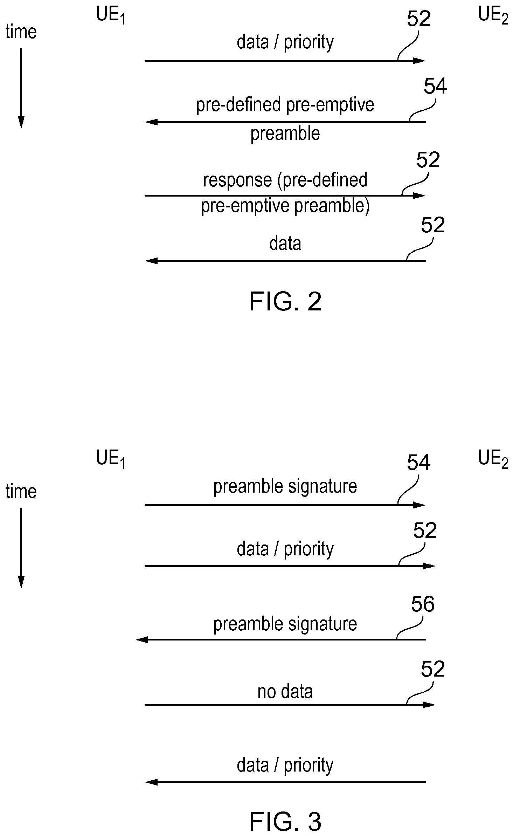

The way that it does this depends on the particular configuration and the signals used are shown in Figures 2 to 4.

Once the request has been sent the user equipment will either receive a response indicating that its request has been accepted and the channel is to be released, or it will monitor the communication channel for a predetermined time that is timed by timer 20 and if no signal is received during this time it will then transmit data on the corresponding communication channel.

Where a response is sent in some embodiments this response signal will take the form of the preamble signature or pre-defined pre-emptive preamble that was sent, such that the device recognises that the user equipment is responding to that particular preamble.

Figures 2 to 4 show signals sent from one user equipment to another user equipment during device to device communication. The user equipment 1 in these Figures is the currently active user equipment that has been allocated the communication channel 52, while user equipment 2 is the higher priority user equipment that wishes to request this communication channel.

Therefore, in Figure 2 the user equipment 1 is transmitting data on communication channel 52 and along with this data it also transmits an indication of its priority. User equipment 2 which requires the use of the communication channel monitors this communication channel and determines that the user equipment that is currently using this communication channel has a lower priority than it has. It therefore transmits a predefined pre-emptive preamble on the preamble channel associated with the communication channel that the user equipment 1 is currently using. This preamble channel is shown as 54 in Figure 2. The user equipment 1 receives the predefined pre-emptive preamble and responds to it on the communication channel 52, indicating that it will stop transmitting data on the communication channel 52. The response may be the predefined pre-emptive preamble such that user equipment 2 will recognise the response. The user equipment 2 can then start to transmit data on communication channel 52.

Figure 3 shows an alternative embodiment. In this embodiment, user equipment 1 requests communication channel 52 by transmitting a preamble signature on preamble channel 54. Higher priority user equipment 2 monitors communication channel 52 and sees that it is currently being used by a user equipment of lower priority than itself. In this embodiment, it signals its request for that channel using the preamble signature that identifies communication channel 52 and is the same preamble signature that user equipment 1 sent on preamble channel 54 when it was requesting the communication channel, but it sends it along a pre-emptive channel. User equipment 1 receives the preamble signature on the pre-emptive channel, recognises it as the preamble signature relating to the communication channel that it is currently using, and therefore stops using that communication channel. The user equipment 2 monitors the communication channel 52, determines that user equipment 1 is no longer sending data and therefore starts to use the communication channel by sending data and an indication of its priority on that channel. In an alternative embodiment it may send a response on the communication channel explicitly indicating that it has received the request, the response may be the preamble signature.

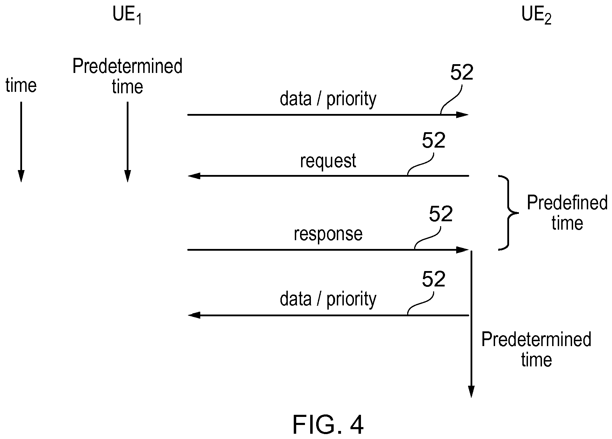

Figure 4 shows an alternative embodiment where user equipment 1 is transmitting data on a communication channel 52 and it transmits this data for a predetermined time. At the end of this time it stops transmitting the data for a predefined time and user equipment 2 will transmit a request to user equipment 1 requesting that it can use this channel. User equipment 1 may respond to this request, whereupon user equipment 2 will start to use the channel and will use it during a predetermined time and will transmit its data and its priority along this channel. In this regard, the predetermined time that it uses that channel for will depend on the priority of the user equipment and, thus, user equipment 2 will use it for longer than user equipment 1 did.

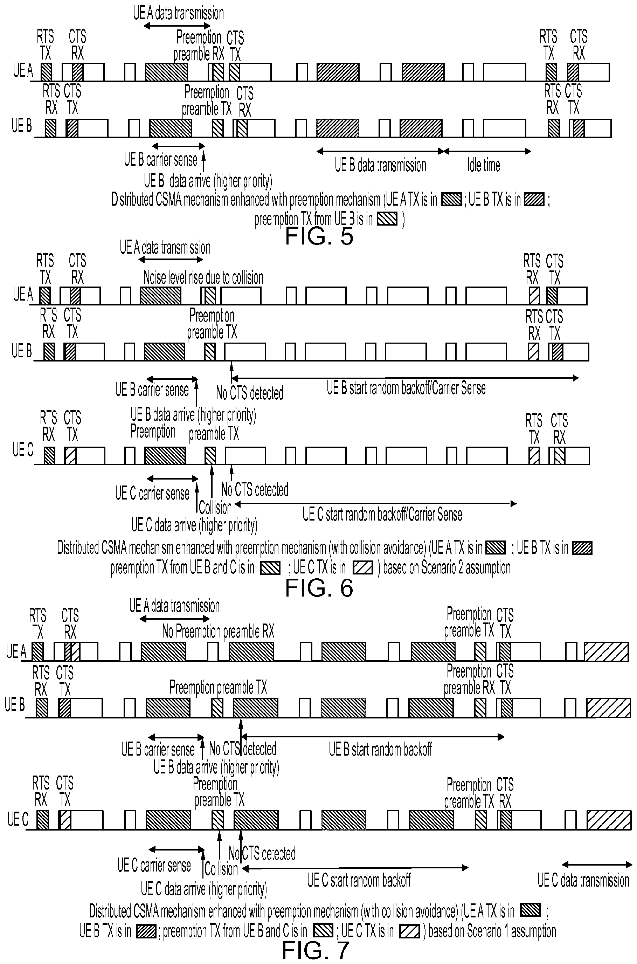

In summary one approach is to indicate to the active lower priority user or transmission that there is a higher priority user or transmission waiting to use the communication channel. This can be done by sending either a special pre-emption preamble associated with the communication channel in the preamble channel or an explicit signal in a separate time-frequency resource (i.e. another channel - pre-emption channel) monitored by the active user. The active user receiving a special preamble in the preamble channel or an explicit signal in the pre-emption channel shall stop transmitting in the communication channel. The higher priority user can then use the communication channel after a predefined time (one communication channel transmission time) from the pre-emption signalling being sent. The active users and other non-active users may also backoff from attempting to contest for the communication channel for that predefined time after the pre-emption signalling has been received. Figure 5 shows the time flow of this pre-emption mechanism. Thus, the multiple high priority UEs may try to pre-empt the existing transmission and collision may occur as a result if 2 or more UEs attempts to pre-empt at the same time on the preamble channel or on the pre-emption channel. Two scenarios for this collision need to be considered depending on the physical layer handling in this respect:
- (Scenario 1) The existing active UE will not be able to decode the special pre-emption preamble or the explicit pre-emption signal and hence will not stop its transmission. The UEs that attempted the pre-emption will detect that the current UE is still transmitting during the predefined time from the pre-emption signalling being sent. After the predefined time, the UEs attempting the pre-emption will perform a random backoff to prevent consecutive collision and restart the pre-emption process again.
- (Scenario 2) The existing active UE performing carrier sense on the preamble channel will see that there is some increased power level on the channel (but is unable to decode the preamble). However it will still stop transmission based on detection of the increased power level. The UEs attempting to pre-empt will check the communication channel for a response of the special preamble. If the special preamble response is not detected in the communication channel, the UEs attempting the pre-emption know that collision has occurred and will perform the random backoff to prevent consecutive collision.

Figure 6 shows the time flow of the pre-emption mechanism based on Scenario 2 while Figure 7 shows the time flow of the pre-emption mechanism based on Scenario 1.

Another approach is to allocate configurable transmission duration for every transmission depending on the QoS/priority of the transmission. Each transmission indicates the QoS/priority of the transmission. After the configurable transmission time of a transmission, the active UE stops transmission on the communication channel. All the UEs in close proximity conducting D2D communication start a fixed/ configurable time t. During this time t, only higher priority transmission can contest for the communication channel. After the time t, all UEs in close proximity conducting D2D communication can again contest for the communication channel. Unlike the previous approach, this approach does not require explicit signalling to request pre-emption and the pre-emption of a transmission occurs at predefined time.

An example of a procedure for pre-empting lower priority user irrespective of the priority of the transmission is as follow:
1. A UE is using the communication channel.
2. A higher priority UE than the UE currently using the communication channel receives a high priority command to use the communication channel immediately (e.g. an emergency message to send or the user presses an emergency button to make an emergency PTT call).
3. The higher priority UE initiates the Access Stratum to trigger the special pre-emption preamble in the preamble channel or an explicit signal in the pre-emption channel.
4. The active UE currently using the communication channel, upon decoding the special pre-emption preamble associated with the communication channel will stop transmission.
5. The higher priority user can then use the communication channel after a predefined time from the pre-emption signalling has been sent (see Figure 5).
6. If during the predefined time, the active UE currently using the communication channel is still using the channel, it means that collision has occurred. Random backoff should be performed to prevent consecutive collision among the UEs attempting to pre-empt the active UE currently using the communication channel (see Figure 7).

An example of a procedure for pre-empting a lower priority transmission which up to step 5 follows the time flow of Figure 5 is as follows:
1. UE A with transmission of priority x is using the communication channel. The priority of the transmission is known to other UE via in-band signalling in the data transmission.
2. UE B access stratum receives data packet from higher layer with priority y and the priority y is higher priority than priority x.
3. The UE initiates the Access Stratum to trigger the special pre-emption preamble in the preamble channel or an explicit signal in the pre-emption channel.
4. The active UE currently using the communication channel, upon decoding the special pre-emption preamble associated with the communication channel will stop transmission.
5. UE B access stratum includes the priority y in the data packet and uses the communication channel after a predefined time from the pre-emption signalling being sent.
6. If during the predefined time, the transmission currently using the communication channel is still using the channel, it means that collision has occurred. Random backoff should be performed to prevent consecutive collision among the UEs attempting to pre-empt the transmission currently using the communication channel

An example of a procedure where no explicit signalling is used:
1. UE A with transmission of priority x is configured to use the communication channel for t1 configurable time (t1 is associated with transmission of priority x)
2. Upon expiry of t1, UE A stops transmission even though the transmission hasn't completed.
3. All UEs in close proximity and conducting D2D communication start a timer t2.
4. During t2, UE B access stratum receives data packet from higher layer with priority y and the priority y is higher priority than priority x. During t2, UE C access stratum receives data packet from higher layer with priority w and the priority w is lower or equal priority than priority x.
5. UE B performs normal access mechanism. UE C is blocked from contesting for the communication channel during t2.

A person of skill in the art would readily recognize that steps of various above-described methods can be performed by programmed computers. Herein, some embodiments are also intended to cover program storage devices, e.g. digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method performed at a user equipment of requesting a communication channel for use by said user equipment (10, 12) for broadcasting data to at least one further user equipment (12, 10) when all of a plurality of communication channels configured for direct user equipment to user equipment communication are currently being used, wherein each of said plurality of communication channels is a half duplex channel and each of said plurality of communication channels has an associated preamble identifying a block of transmission resources comprising said communication channel; said method comprising:
determining a priority of an active user equipment currently broadcasting data to other user equipment using one of said plurality of communication channels; and
in response to detecting that said priority is lower than a current priority of said user equipment, transmitting a request for use of said one of said plurality of communication channels to said active user equipment.

2. A method according to claim 1, wherein said step of transmitting said request comprises transmitting a pre-emption signal to said active user equipment indicating that a higher priority user equipment requires said one of said plurality communication channels and said user equipment should cease transmitting on said one of said plurality of communication channels.

3. A method according to claim 2, wherein said pre-emption signal comprises a predetermined pre-emption preamble signature, said user equipment transmitting said predetermined pre-emption preamble signature on a half duplex preamble channel corresponding to said one of said plurality communication channels.

4. A method according to claim 2, wherein said each of said plurality of communication channels comprises a time frequency resource that is identified by a corresponding preamble signature, said pre-emption signal comprising said preamble signature identifying said one of said plurality of communication channels, said step of transmitting said request comprising :
transmitting said preamble signature on a predefined pre-emption channel, said predefined pre-emption channel comprising a time frequency resource for broadcasting data to said user equipment, receipt of said preamble signature on said pre-emption channel indicating to said active user equipment that a higher priority user equipment requires said one of said plurality communication channels identified by said preamble signature and said user equipment should cease transmitting on said one of said plurality of communication channels.

5. A method according to claim 1, said method comprising determining when said active user equipment stops transmitting on said one of said plurality of communication channels and in response to detecting that said active user equipment has stopped transmitting, performing said step of transmitting said request.

6. A method according to claim 5, said method comprising in response to receiving a response to said request, transmitting data on said one of said plurality of communication channels during a predetermined transmission time and after said predetermined transmission time stopping transmitting during a predefined time, said predefined time allowing higher priority user equipment to transmit requests for said one of said plurality of channels.

7. A method according to claim 6, wherein said predetermined time is dependent upon at least one of a priority of said user equipment transmitting said data and quality of service of said data transmission.

8. A method according to any one of claims 1 to 4, comprising the step of monitoring said one of said plurality of communication channels for a predetermined time after transmitting said request and in response to detecting no communications, initiating data communication using said one of said plurality of communication channels.

9. A method according to any one of claims 1 to 4 and 8, comprising:
monitoring said one of said plurality of communication channels for a predetermined time after transmitting said request and in response to detecting continued communications from said active user equipment, waiting for a random backoff time and then transmitting said request again.

10. A method according to any one of claim 1 to 4 and 8 of 9, said method further comprising:
transmitting data on said one of said communication channels; and
in response to detecting an increased power level on a corresponding half duplex preamble channel, stopping transmitting data on said one of said communication channels and not requesting use of said one of said communication channels for a predetermined time.

11. A method according to any one of claims 1 to 8 or 10, comprising the step of monitoring said one of said plurality of communication channels for a predetermined time after transmitting said request and in response to detecting no response to said request, waiting for a random back-off time and then transmitting said request again.

12. A method according to one of claims 1 to 4 and 8 to 11, comprising transmitting data on one of said communication channels and receiving said request from one of said further user equipment, transmitting a response to said request and stopping transmitting data on said one of said communication channels and not requesting use of said communication channel for a predetermined time.

13. A method according to any preceding claim, wherein an indication of a priority of at least one of said user equipment and a current transmission of said user equipment is transmitted on said one of said plurality of communication channels along with said data.

14. A user equipment (10, 12) configured to communicate wirelessly with at least one further user equipment (12, 10), said user equipment comprising:
a port (42) for receiving signals and outputting signals on one of a plurality of communication channels for direct user equipment to user equipment communication, said port being a half duplex port such that for said one communication channel a signal can either be received or transmitted;
detection logic (35) for detecting when all of said plurality of communication channels for direct user equipment to user equipment communication are currently being used, wherein each of said plurality of communication channels has an associated preamble identifying a block of transmission resources comprising said communication channel;
priority detection logic (37) for determining a priority of an active user equipment currently broadcasting data to other user equipment using one of said plurality of communication channels; and
transmission circuitry (40) operable to transmit to said active user equipment a request for use of said one of said plurality of communication channels in response to detecting that said priority is lower than a current priority of said user equipment.

15. A computer program which when executed by a data processing apparatus controls said data processing apparatus to performs steps in a method according to any one of claims 1 to 13.

## Patentansprüche

1. An einem Benutzergerät ausgeführtes Verfahren zum Anfordern eines Kommunikationskanals zur Benutzung durch besagtes Benutzergerät (10, 12) zum Senden von Daten an mindestens ein weiteres Benutzergerät (12, 10), wenn alle aus einer Vielzahl von Kommunikationskanälen, die für die direkte Kommunikation von Benutzergerät zu Benutzergerät konfiguriert sind, aktuell belegt sind, wobei jeder aus der besagten Vielzahl von Kommunikationskanälen ein Halbduplexkanal ist und wobei jeder aus der besagten Vielzahl von Kommunikationskanälen eine mit ihm assoziierte Präambel hat, die einen Block von Übertragungsressourcen identifiziert, der besagten Kommunikationskanal umfasst; wobei besagtes Verfahren umfasst:
das Bestimmen einer Priorität eines aktiven Benutzergeräts, das gegenwärtig unter Verwendung eines aus der besagten Vielzahl von Kommunikationskanälen Daten an ein anderes Benutzergerät sendet; und
in Reaktion auf das Feststellen, dass besagte Priorität niedriger ist als die aktuelle Priorität besagten Benutzergeräts, das Übermitteln einer Anforderung zur Benutzung des besagten einen Kommunikationskanals aus besagter Vielzahl von Kommunikationskanälen an besagtes aktives Benutzergerät.

2. Verfahren nach Anspruch 1, wobei besagter Schritt des Übermittelns der besagten Anforderung das Übermitteln eines Preemption-Signals an besagtes aktives Benutzergerät umfasst, welches anzeigt, dass ein Benutzergerät mit höherer Priorität den besagten einen aus der Vielzahl von Kommunikationskanälen anfordert und dass besagtes Benutzergerät das Übermitteln auf besagtem einem aus der besagten Vielzahl von Kommunikationskanälen einstellen soll.

3. Verfahren nach Anspruch 2, wobei besagtes Preemptions-Signal eine vorbestimmte Preemptions-Präambel-Signatur umfasst, wobei besagtes Benutzergerät die besagte, vordefinierte Preemptions-Präambel-Signatur auf einem Halbduplex-Präambelkanal übermittelt, der besagtem einem aus der besagten Vielzahl von Kommunikationskanälen entspricht.

4. Verfahren nach Anspruch 2, wobei jeder besagte Kommunikationskanal aus besagter Vielzahl von Kommunikationskanälen eine Zeitfrequenzressource umfasst, die von einer entsprechenden Präambel-Signatur identifiziert wird, wobei besagtes Preemptions-Signal besagte Präambel-Signatur umfasst, welche den besagen einen aus der besagten Vielzahl von Kommunikationskanälen identifiziert, wobei besagter Schritt des Übermittelns der besagten Anfrage umfasst:
das Übermitteln der besagten Präambel-Signatur auf einem vordefinierten Preemptions-Kanal, wobei der besagte, vordefinierte Preemptions-Kanal eine Zeitfrequenzressource zum Senden von Daten an besagtes Benutzergerät umfasst, wobei der Empfang besagter Präambel-Signatur auf besagtem Preemptions-Kanal dem besagten, aktiven Benutzergerät anzeigt, dass ein Benutzergerät mit höherer Priorität einen aus besagter Vielzahl von Kommunikationskanälen anfordert, die von besagter Präambel-Signatur identifiziert werden, und das besagtes Benutzergerät das Senden auf besagtem einem aus besagter Vielzahl von Kommunikationskanälen einstellen soll.

5. Verfahren nach Anspruch 1, wobei besagtes Verfahren umfasst, zu bestimmen, wann das besagte, aktive Benutzergerät das Übermitteln auf dem besagten einen aus besagter Vielzahl von Kommunikationskanälen einstellt, und wobei besagtes Verfahren weiterhin umfasst, in Reaktion auf das Feststellen, dass das besagte, aktive Benutzergerät die Übermittlung eingestellt hat, den Schritt des Übermittelns der besagten Anfrage auszuführen.

6. Verfahren nach Anspruch 5, wobei besagtes Verfahren in Reaktion auf den Empfang einer Antwort auf besagte Anfrage umfasst, während eines vordefinierten Übertragungszeitraums Daten auf dem besagten einen aus besagter Vielzahl von Kommunikationskanälen zu übermitteln und nach dem besagten, vordefinierten Übertragungszeitraum die Übertragung für einen vordefinierten Zeitraum einzustellen, wobei besagter vordefinierter Zeitraum einem Benutzergerät mit höherer Priorität ermöglicht, Anfragen für besagten einen aus besagter Vielzahl von Kommunikationskanälen zu übermitteln.

7. Verfahren nach Anspruch 6, wobei besagter vordefinierter Zeitraum abhängt von mindestens entweder einer Priorität besagten Benutzergeräts, welches besagte Daten übermittelt, oder einer Dienstgüte besagter Datenübermittlung.

8. Verfahren nach einem der Ansprüche 1 bis 4, den Schritt des Überwachens besagten einen aus besagter Vielzahl von Kommunikationskanälen über einen vorbestimmten Zeitraum nach der Übermittlung besagter Anfrage hinweg umfassend und in Reaktion darauf, dass keine Kommunikationen festgestellt werden, das Initiieren der Datenkommunikation unter Verwendung des besagten einen aus besagter Vielzahl von Kommunikationskanälen.

9. Verfahren nach einem beliebigen der Ansprüche 1 bis 4 und 8, umfassend:
das Überwachen des besagten einen aus besagter Vielzahl von Kommunikationskanälen nach Übermittlung besagter Anfrage und über einen vorbestimmten Zeitraum hinweg, und in Reaktion auf das Feststellen anhaltender Kommunikationen von dem besagten, aktiven Benutzergerät das Abwarten für die Dauer eines zufallsgenerierten Zurückstellungszeitraums und dann das erneute Übermitteln der besagten Anforderung.

10. Verfahren nach einem beliebigen der Ansprüche 1 bis 4 und 8 oder 9, wobei besagtes Verfahren weiterhin umfasst:
das Übermitteln von Daten auf besagtem einem aus besagter Vielzahl von Kommunikationskanälen; und
in Reaktion auf das Feststellen einer erhöhten Leistungsstufe auf einem entsprechenden Halbduplex-Präambelkanal das Einstellen der Übermittlung von Daten auf besagtem einem aus besagter Vielzahl von Kommunikationskanälen und für einen vorbestimmten Zeitraum das Unterlassen des Anforderns der Nutzung des besagten einen der besagten Kommunikationskanäle.

11. Verfahren nach einem der Ansprüche 1 bis 8 oder 10, den Schritt des Überwachens besagten einen aus besagter Vielzahl von Kommunikationskanälen über einen vorbestimmten Zeitraum nach der Übermittlung besagter Anfrage hinweg umfassend und in Reaktion darauf, dass keine Antwort auf besagte Anforderung festgestellt wird, das für einen zufallsgenerierten Zurückstellungszeitraum andauernde Warten bis zur erneuten Übermittlung der besagten Anforderung.

12. Verfahren nach einem der Ansprüche 1 bis 4 und 8 bis 11, das Übermitteln von Daten auf einem der besagten Kommunikationskanäle und den Empfang besagter Anfrage von einem der besagten weiteren Benutzergeräte umfassend, sowie weiterhin das Übermitteln einer Antwort auf besagte Anforderung und das Stoppen der Übermittlung von Daten auf dem besagten einen der besagten Kommunikationskanäle umfassend, dabei für einen vorbestimmten Zeitraum keine Nutzung besagten Kommunikationskanals anfordernd.

13. Verfahren nach einem jeglichen der vorgenannten Ansprüche, wobei eine Indikation einer Priorität mindestens eines der besagten Benutzergeräte und eine laufende Übermittlung besagten Benutzergeräts zusammen mit besagten Daten auf besagtem einem aus besagter Vielzahl von Kommunikationskanälen übermittelt wird.

14. Benutzergerät (10, 12), konfiguriert für das drahtlose Kommunizieren mit mindestens einem weiteren Benutzergerät (12, 10), wobei besagtes Benutzergerät umfasst:
einen Port (42) für den Empfang von Signalen und die Ausgabe von Signalen auf einem aus einer Vielzahl von Kommunikationskanälen für direkte Kommunikation von Benutzergerät zu Benutzergerät, wobei besagter Port ein Halbduplex-Port ist, dergestalt, dass für besagten einen Kommunikationskanal ein Signal entweder empfangen oder übermittelt werden kann;
Feststellungslogik (35) für das Feststellen, wenn alle aus besagter Vielzahl von Kommunikationskanälen für direkte Kommunikation von Benutzergerät zu Benutzergerät aktuell benutzt werden, wobei jeder aus der besagten Vielzahl von Kommunikationskanälen eine mit ihm assoziierte Präambel hat, die einen Block von Übermittlungsressourcen identifiziert, der besagten Kommunikationskanal umfasst;
Prioritätsfeststellungslogik (37) für das Bestimmen einer Priorität eines aktiven Benutzergeräts, das gegenwärtig unter Verwendung eines aus der besagten Vielzahl von Kommunikationskanälen Daten an ein anderes Benutzergerät sendet; und
Übertragungsschaltung (40) betriebsbereit für das Übermitteln einer Anfrage zur Benutzung besagten einen aus besagter Vielzahl von Kommunikationskanälen an besagtes aktives Benutzergerät, was in Reaktion auf das Feststellen erfolgt, dass besagte Priorität niedriger ist als eine aktuelle Priorität des besagten Benutzergeräts.

15. Computerprogramm, welches bei dessen Ausführen auf einer Datenverarbeitungsvorrichtung besagte Datenverarbeitungsvorrichtung steuert, um die Schritte eins Verfahrens gemäß einem beliebigen der Ansprüche 1 bis 13 auszuführen.

## Revendications

1. Procédé effectué au niveau d'un équipement d'utilisateur visant à demander une voie de communication destinée à être utilisée par ledit équipement d'utilisateur (10, 12) pour diffuser des données vers au moins un équipement d'utilisateur supplémentaire (12, 10) lorsque la totalité d'une pluralité de voies de communication configurées pour une communication d'équipement d'utilisateur à équipement d'utilisateur directe sont en cours d'utilisation, chacune de ladite pluralité de voies de communication étant une voie semi-duplex et chacune de ladite pluralité de voies de communication ayant un préambule associé identifiant un bloc de ressources de transmission comprenant ladite voie de communication ; ledit procédé comprenant les étapes suivantes :
déterminer une priorité d'un équipement d'utilisateur actif diffusant actuellement des données vers un autre équipement d'utilisateur en utilisant une de ladite pluralité de voies de communication ; et
en réponse à la détection du fait que ladite priorité est inférieure à une priorité actuelle dudit équipement d'utilisateur, transmettre une demande d'utilisation de ladite une de ladite pluralité de voies de communication audit équipement d'utilisateur actif.

2. Procédé selon la revendication 1, dans lequel ladite étape de transmission de ladite demande comprend la transmission d'un signal de préemption audit équipement d'utilisateur actif indiquant qu'un équipement d'utilisateur de priorité supérieure requiert ladite une de ladite pluralité de voies de communication et que ledit équipement d'utilisateur devrait cesser de transmettre sur ladite une de ladite pluralité de voies de communication.

3. Procédé selon la revendication 2, dans lequel ledit signal de préemption comprend une signature de préambule de préemption prédéterminée, ledit équipement d'utilisateur transmettant ladite signature de préambule de préemption prédéterminée sur une voie de préambule semi-duplex correspondant à ladite une de ladite pluralité de voies de communication.

4. Procédé selon la revendication 2, dans lequel ladite chacune de ladite pluralité de voies de communication comprend une ressource temps fréquence qui est identifiée par une signature de préambule correspondante, ledit signal de préemption comprenant ladite signature de préambule identifiant ladite une de ladite pluralité de voies de communication, ladite étape de transmission de ladite demande comprenant l'étape suivante :
transmettre ladite signature de préambule sur une voie de préemption prédéfinie, ladite voie de préemption prédéfinie comprenant une ressource temps fréquence pour diffuser des données vers ledit équipement d'utilisateur, la réception de ladite signature de préambule sur ladite voie de préemption indiquant audit équipement d'utilisateur actif qu'un équipement d'utilisateur de priorité supérieure requiert ladite une de ladite pluralité de voies de communication identifiée par ladite signature de préambule et que ledit équipement d'utilisateur devrait cesser de transmettre sur ladite une de ladite pluralité de voies de communication.

5. Procédé selon la revendication 1, ledit procédé comprenant la détermination de quand ledit équipement d'utilisateur actif arrête de transmettre sur ladite une de ladite pluralité de voies de communication et en réponse à la détection du fait que ledit équipement d'utilisateur actif a arrêté de transmettre, l'exécution de ladite étape de transmission de ladite demande.

6. Procédé selon la revendication 5, ledit procédé comprenant, en réponse à la réception d'une réponse à ladite demande, la transmission de données sur ladite une de ladite pluralité de voies de communication durant un temps de transmission prédéterminé et après ledit temps de transmission prédéterminé l'arrêt de la transmission durant un temps prédéfini, ledit temps prédéfini permettant à un équipement d'utilisateur de priorité supérieure de transmettre des demandes pour ladite une de ladite pluralité de voies.

7. Procédé selon la revendication 6, dans lequel ledit temps prédéterminé dépend d'au moins une d'une priorité dudit équipement d'utilisateur transmettant lesdites données et de la qualité de service de ladite transmission de données.

8. Procédé selon l'une quelconque des revendications 1 à 4, comprenant l'étape de surveillance de ladite une de ladite pluralité de voies de communication pendant un temps prédéterminé après la transmission de ladite demande et en réponse à la détection d'aucune communication, l'initiation d'une communication de données en utilisant ladite une de ladite pluralité de voies de communication.

9. Procédé selon l'une quelconque des revendications 1 à 4 et 8, comprenant l'étape suivante :
surveiller ladite une de ladite pluralité de voies de communication pendant un temps prédéterminé après la transmission de ladite demande et en réponse à la détection de communications continues à partir dudit équipement d'utilisateur actif, attendre un temps de repli aléatoire et transmettre ensuite à nouveau ladite demande.

10. Procédé selon l'une quelconque des revendications 1 à 4 et 8 ou 9, ledit procédé comprenant en outre les étapes suivantes :
transmettre des données sur ladite une desdites voies de communication ; et
en réponse à la détection d'un niveau de puissance accru sur une voie de préambule semi-duplex correspondante, arrêter de transmettre des données sur ladite une desdites voies de communication et ne pas demander l'utilisation de ladite une desdites voies de communication pendant un temps prédéterminé.

11. Procédé selon l'une quelconque des revendications 1 à 8 ou 10, comprenant l'étape de surveillance de ladite une de ladite pluralité de voies de communication pendant un temps prédéterminé après la transmission de ladite demande et en réponse à la détection d'aucune réponse à ladite demande, attendre un temps de repli aléatoire et transmettre ensuite à nouveau ladite demande.

12. Procédé selon l'une quelconque des revendications 1 à 4 et 8 à 11, comprenant la transmission de données sur une desdites voies de communication et la réception de ladite demande en provenance d'un dudit équipement d'utilisateur supplémentaire, la transmission d'une réponse à ladite demande et l'arrêt de la transmission de données sur ladite une desdites voies de communication et le fait de ne pas demander l'utilisation de ladite voie de communication pendant un temps prédéterminé.

13. Procédé selon l'une quelconque des revendications précédentes, dans lequel une indication d'une priorité d'au moins un dudit équipement d'utilisateur et d'une transmission actuelle dudit équipement d'utilisateur est transmise sur ladite une de ladite pluralité de voies de communication conjointement avec lesdites données.

14. Equipement d'utilisateur (10, 12) configuré pour communiquer de manière sans fil avec au moins un équipement d'utilisateur supplémentaire (12, 10), ledit équipement d'utilisateur comprenant :
un port (42) pour recevoir des signaux et sortir des signaux sur une d'une pluralité de voies de communication pour une communication d'équipement d'utilisateur à équipement d'utilisateur directe, ledit port étant un port semi-duplex de sorte que pour ladite une voie de communication un signal puisse être soit reçu soit transmis ;
une logique de détection (35) pour détecter quand la totalité de ladite pluralité de voies de communication pour une communication d'équipement d'utilisateur à équipement d'utilisateur directe sont en cours d'utilisation, chacune de ladite pluralité de voies de communication ayant un préambule associé identifiant un bloc de ressources de transmission comprenant ladite voie de communication ;
une logique de détection de priorité (37) pour déterminer une priorité d'un équipement d'utilisateur actif diffusant actuellement des données vers un autre équipement d'utilisateur en utilisant une de ladite pluralité de voies de communication ; et
un ensemble de circuits de transmission (40) exploitable pour transmettre audit équipement d'utilisateur actif une demande d'utilisation de ladite une de ladite pluralité de voies de communication en réponse à la détection du fait que ladite priorité est inférieure à une priorité actuelle dudit équipement d'utilisateur.

15. Programme informatique qui, lorsqu'il est exécuté par un appareil de traitement de données, commande ledit appareil de traitement de données pour effectuer des étapes dans un procédé selon l'une quelconque des revendications 1 à 13.
